# EUROPEAN PATENT SPECIFICATION

(11) **EP 3 421 321 B1**
(45) Date of publication and mention of the grant of the patent: **11.05.2022**
(21) Application number: 17177874.9
(22) Date of filing: 26.06.2017
(51) Int. Cl.: B62B 3/06

(54) **PALLET TRUCK**
PALETTENHUBWAGEN
CHARIOT À PALETTE

(43) Date of publication of application: 02.01.2019
(73) Proprietor: Toyota Material Handling Manufacturing Sweden AB, 595 81 Mjölby (SE)
(72) Inventor: Öberg, John, 595 34 Mjölby (SE)
(74) Representative: Zacco Sweden AB

(56) References cited:
- WO-A1-01/03990
- WO-A1-2004/067351
- WO-A1-2017/027924
- GB-A- 1 030 471
- US-A- 4 615 533

## Description

The present invention relates to a pallet truck according to claim 1. A method for operating a pallet truck according to claim 8 and 9 and a computer executable software according to claim 11.

### PRIOR ART

Pallet trucks have been known for a long time. They can also be called pallet jacks, pallet pumps, pump truck, dog, jigger or hand truck.

In general they are simple and manually operated without any power means other than what the operator provides, for movement but also lifting.

Document WO 2008/079752 A2 discloses a pallet jack that is improved for transport on rough surfaces. It also discloses an electrical lifting mechanism as an alternative to hydraulic lifting mechanism. The redesigned pallet jack is provided with further handles and different wheels compared with prior art thus giving a larger and heavier design than the prior art. Document WO 2004/067351 A1 discloses a pallet truck comprising a stand with two wheels, a lifting cylinder and pump cylinder pressurized by manual pumping of a lever.

### SHORT DESCRIPTION OF THE INVENTION

The objective of the present invention is to provide a pallet truck that is more efficient in usage for an operator without jeopardizing the original simple function of the original pallet truck. In order to achieve this it is suggested a pallet truck comprising two forks for lifting and transporting a pallet. The pallet truck has a hydraulic lifting system comprising a first hydraulic pump and a hydraulic cylinder. A tiller arm is comprised that is operable for powering the first hydraulic pump by a manual lifting and lowering movement of the tiller arm. The movement of the tiller arm is such that a load is lifted by actuating of the hydraulic cylinder on the forks to a maximal height H and at a maximal weight M. Two main wheels are comprised that are hinged in a vertical axle to which they are attached. The tiller arm is connected to the wheels for steering them by rotating in the vertical axle. The pallet truck comprises an electric motor and a second hydraulic pump powered by said electric motor. The electric motor and the second hydraulic pump are operable to lift the forks to the maximal height h, wherein h < H. To this the pallet truck can also have or has the capacity of the electric motor and second hydraulic pump to lift a maximal load of mass m, wherein m < M.

The advantage of this pallet truck is that it still within the frame structure of a manual pallet truck can achieve a considerable improvement for the operation of the pallet truck. In order to achieve an ingenious limitation to the lift movement by means of the electric hydraulic pump is implemented. In doing so despite the very limited dimensions at hand, a pallet truck with an electrically powered lift movement can be achieved, thus providing a more efficient operation of the pallet truck during a full working day. The operator can also still perform manual operation of the pallet truck if desired. According to a further development the hydraulic lifting system of the pallet truck comprises a hydraulic reservoir for hydraulic fluid, preferably the hydraulic reservoir is common for both the first hydraulic pump and the second hydraulic pump.

To include a reservoir for hydraulic fluid allows the system to be balanced. To use a common reservoir for both hydraulic pumps allows for a simple and easy maintainable system as only one reservoir needs to be monitored from time to time.

According to a further development of the pallet truck the limitation of the lift height h for the electric motor and the second hydraulic pump is controllable by means of a switch connect to the electric motor, wherein the switch turns off power supply to the electric motor when actuated by the lift movement of the pallet truck, for example the switch is actuated by the extension of the hydraulic cylinder.

This is a simple solution that only requires a simple electrical wiring in the pallet truck. It is also easy to maintain and reliable.

According to a further development the pallet truck comprises a bypass valve that is arranged to open above a predetermined pressure p corresponding to a required pressure for lifting a predetermined weight m, wherein the bypass valve is comprised on pressure side of second hydraulic pump such any pressure P > p could not be transferred to the hydraulic lift cylinder from the second hydraulic pump , as the bypass valve would open, preferably the open bypass valve lead to a comprised circulation line leading back to the suction side of the second hydraulic pump (9). This represents a particular simple solution to prevent the electric motor and the second hydraulic pump from lifting masses above a predetermined mass m. As the bypass valve opens no further lifting can be performed with the second hydraulic pump.

According to a further development of the pallet truck the limitation of lift height h and/or weight m is controlled by a control unit comprised in the pallet truck and programmed to stop a lifting movement at a height h and/or a weight m, when a parameter data h and/or m detectable by a height sensor and/or a weight sensor of the pallet truck, and wherein said parameter data is transferable to said control unit by means of provided communication means, preferably in form of a cable network.

By including a control unit and one or several sensors, the pallet truck can be adaptable and different limitations to lifting are easy to implement.

According to a further development the pallet truck comprises a power source, preferably the power source is a battery.

A battery is a simple solution for powering the electric motor, instead of an external cable for example.

According to a further development of the pallet truck, the main wheel is a tandem wheel pair comprising two wheels on a common axle. A tandem wheel pair gives a more stable pallet truck.

It is also disclosed a method of operating a pallet truck, with the steps of:
detecting the lift height in a lift movement by means of a height sensor,
determining if the lift height is equal to a predetermined value h,
prevent an electric motor connected to a hydraulic pump of the lifting system from operating until lift height is lower than the predetermined value h.

By limiting lift height it is possible to save energy regardless of load weight that is lifted.

It is also disclosed a method of operating a pallet truck comprising the steps of:
detecting the load weight on a load carrier of the pallet truck by means of a weight sensor determining if the weight on the forks is equal or higher than a predetermined value m
prevent an electric motor connected to an hydraulic pump of the lifting system from operating until the load weight on the forks is lower than the predetermined value m,

By limiting load weight it is possible to save energy for the electric lifting regardless of the lift height performed.

It is also disclosed a method step of operating a pallet truck comprising the step of:
prevent the hydraulic pump connected to the electric motor from operating if either of lift height h or load weight m, is equal to or higher than the predetermined value of the respective height h or load weight m.

By combining restriction to lift height and lift weight for the electric lift operation, further save of energy for the electric lifting can be achieved. For example if the load weight is lower than a pre-set maximum weight still the lift height restriction provides for saving of energy. A computer executable software stored on a computer readable medium is also disclosed. The software when transferred to and stored on a control unit of a pallet truck according to any of the aspects above, performs the method according to any of the aspects above.

A computer readable software is also disclosed.

The advantage of having the software is that it can be easily copied to several control units of several pallet trucks. It can also easily be downloaded and updated from the internet, or locally by a manual setting on the pallet truck.

### LIST OF DRAWINGS

Figure 1 discloses a pallet truck according to the invention.
Figure 2 discloses the hydraulic system of the pallet truck of figure 1.
Figure 3 discloses the relation between a first lift height h and a maximal lift height H.
Figure 4 discloses the relation between a first load weight m and a maximal load weight M.
Figure 4a discloses the relation between a first load weight m and a maximal load weight M and pressures p and P.
Figure 5 discloses a switch actuated by the lift cylinder.
Figure 6 discloses a set up with a lift sensor and a weight sensor connected to a control unit.
Figure 8 discloses a method for operating a pallet truck.
Figure 9 discloses a method for operating a pallet truck.
Figure 10 discloses a method step for operating a pallet truck.
Figure 11 discloses an example of a computer readable medium.

### DETAILED DESCRIPTION

The present disclosure is related to a pallet truck. The pallet truck has a manual lifting system that has a manually operated hydraulic pump. The hydraulic pump is operated by a tiller arm. An operator manually pumps the tiller arm up and down thereby actuating the hydraulic pump. A hydraulic cylinder connected to the hydraulic pump receives hydraulic fluid from the pump. The hydraulic cylinder actuates on a load carrier in the form of forks, thereby lifting the forks. The hydraulic fluid is pumped from a non-pressurized reservoir where the hydraulic fluid is stored when not in use. Further a second hydraulic pressurizer is mounted to the hydraulic system. The second hydraulic pressurizer can act directly on the hydraulic pump. The second hydraulic pressurizer can also be connected to the hydraulic system and provide a second hydraulic pump. The second hydraulic pump is driven by a motor. The motor is preferred to be an electric motor. The motor is powered by a power source. The power source is preferred to be a battery. The battery is preferred to be a lithium ion battery, but can be a lead battery or any suitable battery, such as a lithium polymer battery. The control of the motor can be made by a simple switch that is actuated by the lift movement. The simple switch then stops the motor from operation if the lift height exceeds a predetermined value. In simplest form the switch acts on the lifting cylinder or a protrusion of the movable parts of the pallet truck. Thus the lift movement by means of the motor is stopped at a predetermined height. The pallet truck can also comprise a control unit that has computer executable software installed on it. The control unit receives information from a sensor on the pallet truck. When said sensor gives a value that is equal to or over a predetermined value the control unit prevents or shut down the operation of the motor. The sensor can be a height senor. The sensor can be a weight sensor. There can also be provided both a weight sensor and a height sensor. Both sensors can cooperate, such that the control unit can prevent operation of the motor either based on height or on weight being equal to or exceeding predetermined values. That is for example if the weight of a load is below a predetermined value the motor can operate until the lift height is equal to or over a predetermined lift height, and then be shut down. At all aspects above the manual lifting operation is always operable to any lift height. The motor can for all aspects also help the lift movement when manual operation is performed such that the manual actuating is either made less heavy or the lift operation is performed with increased speed. For all aspects above there is a manual lever for actuating on a valve that depressurises the hydraulic cylinder for lowering a load. For the operation of the motor, there is for all aspects above provided a control button that an operator can actuate upon or there is provided a sensor that senses that the operation of the manual hydraulic pump is operated and then the motor is powering the second hydraulic pump in tandem with the manual hydraulic pump. Even though preferred to have a common reservoir for hydraulic fluid, it should be understood that it is possible to provide a dedicated reservoir for the second hydraulic pump and have another dedicated reservoir for the manual hydraulic pump. According to a preferred aspect there is a bypass valve comprised on the pressure side of the second hydraulic pump. The bypass valve is set to open at a pressure that will prevent the second hydraulic pump from being able to lift the heaviest loads on its own. Thus an energy save is achieved.

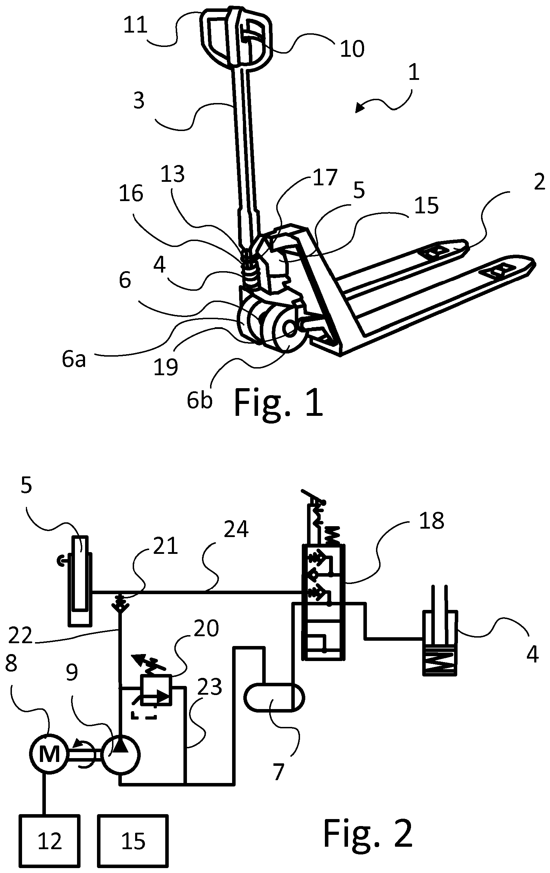

Figure 1 discloses a pallet truck 1 with a load carrier in the form of two forks 2. The pallet truck 1 has a manual hydraulic pump 4, figure 1, 2. The manual hydraulic pump 4 is operated by the tiller arm 3. When the tiller arm 3 actuates on the manual hydraulic pump 4 the forks 2 are actuated by means of a hydraulic cylinder 5. The manual hydraulic pump 4 pumps hydraulic fluid from a reservoir 7. The pallet truck 1 further comprises a second hydraulic pump 9. A motor 8 powers the second hydraulic pump 9. The motor 8 is preferred to be an electric motor. A power source 12 provides power to the motor 8. The power source 12 is preferred to be a battery. The manual hydraulic pump 4 and the second hydraulic pump 9 act independently of each other. Thus the lift movement of the pallet truck 1 can be at start of the lift movement be performed by either the manual hydraulic pump 4 or the second hydraulic pump 9, or both pumps together. The hydraulic pump 9 and the motor 8 is preferred to be small as the chassis of the pallet truck is preferably kept compact and in the same size as prior art manual pallet trucks.

There are two main wheels 6 that are hinged in a vertical axle. The tiller arm 3 is attached to the wheels 6 such that it can swing the wheels 6 for steering the pallet truck 1. A handle 11 on the tiller arm 3 is easily graspable by an operator for operation of the pallet 1. An arm 10 on the handle 11 can be operated for depressurising the hydraulic cylinder 5. Further smaller rolls or wheels are provided under each fork 2.

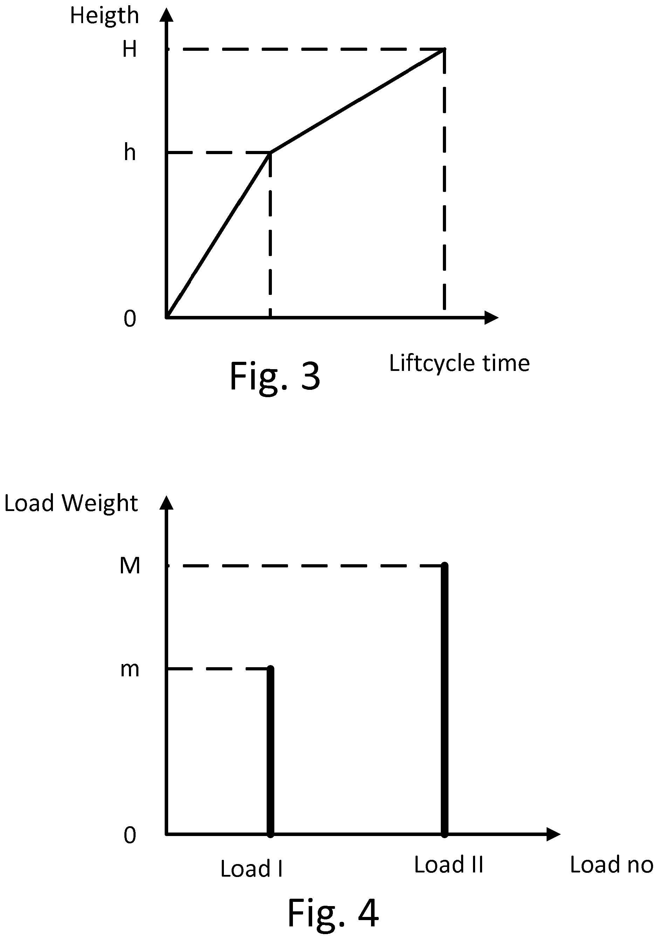

The pallet truck 1 further comprises a limitation to the lifting movement performed by the second hydraulic pump 9. The manual hydraulic pump 4 has restriction to the lifting movement other than purely capacity or mechanical limits. A first restriction to the lift movement is suggested as a lifting height h that is smaller than the maximal lift height H, see figure 3.

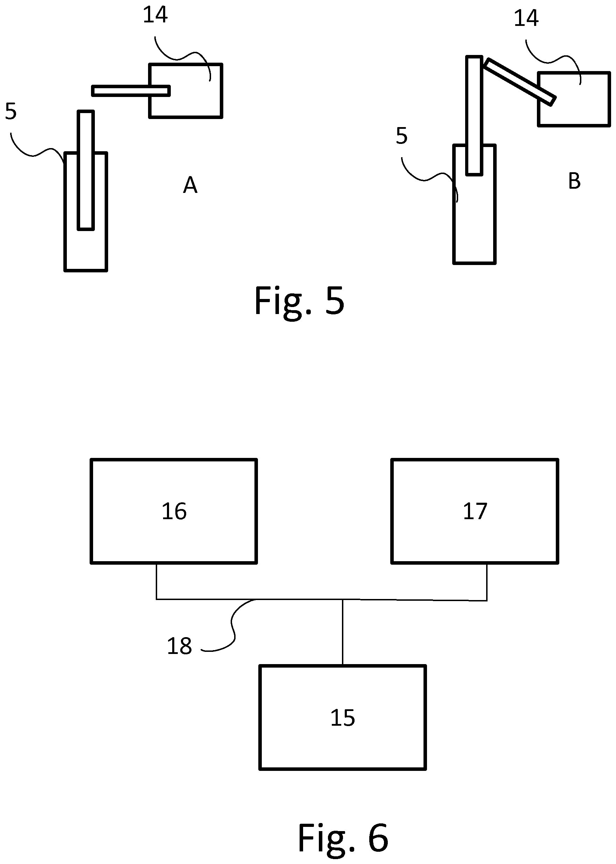

The lift height restriction for the second hydraulic pump is possible in several ways. A first way of restricting the lift height is disclosed in figure 5. A switch 14 is actuated upon the movement of the lift cylinder 5 when it extends. As the cylinder extends from mode A to mode B the switch 14 is actuated, see also figure 3. The switch 14 is then connected to the electric supply of the motor 8 and cuts the power as the extension reaches a predetermined lift height h. The lift movement can be continued by means of the manual hydraulic pump, but the motor 8 cannot be used until the lift height is below h.

A second way of restricting the lift height to h is by means of an installed height sensor 16, figure 6. Further an installed control unit 15 receives data from the height sensor 16 and when the control unit determines that the lift height is equal to or exceeds a value h the power to the motor 8 is shut down by the control unit 15. The control unit monitors the lift movement and when the lift height is below h, the control unit allows operation of the electric motor 8 again.

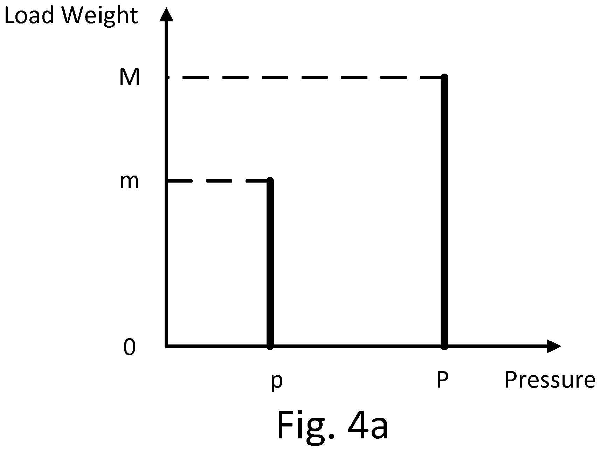

A third way of restricting lift operation is detection of weight by means of a weight sensor 17. See figure 4. Load I has a lower load weight m compared with Load II that has a higher load weight M. The weight sensor 17 detects a load weight on the forks and if this is equal to or exceeds a value m, the motor 8 is set to not be operable by the control unit 15. m is lower than the maximal weight that a manual operation of the manual hydraulic pump 4 can lift. Thus the predetermined lifting weight m that is lower than the maximal lifting weight M that is possible to lift by means of first hydraulic pump 4, can be set and monitored by a discussed control unit 15.

The first, second and third restrictions of operation of the electric motor 8 and the second hydraulic pump 9 can also be combined. This means that for example a lift height h restriction is applicable for any load weight. But operation of the electric motor 8 is prevented for all lift heights if load weight exceeds m. It is also possible to have the switch 14 operate in tandem with the lift height sensor 16 such that a redundancy is achieved. For example switch 14 can limit lifting to a lift height h2 that is higher than initial restriction h but lower than maximal lift height H. If sensor 16 then has broken down the lift height that can be achieved by means of electric motor 8 and second hydraulic pump 9, is still lower than the maximal lift height H.

A forth way of restricting lift operation is based on pressure, also combinable with one or two or all three restrictions above, is to have a bypass valve 20 that opens at a specified predetermined pressure p, figure 2. The predetermined pressure p is set such that it prevents loads with a heavier weight than a predetermined weight m to be lifted by means of the electric motor 8 and the hydraulic pump 9. Thus if a weight that is heavier than m is positioned on the load forks 2, the valve 20, will open and the hydraulic fluid will only circulate through line 23 and no lifting operation is performed. The circulation line 23 is preferred to lead back to the suction side of the second hydraulic pump 9. With suction side is meant for example the line leading to the intake of the pump, but it could also mean back to the reservoir 7 for hydraulic fluid. In order to still lift the load weighing more than m, the operator will need to actuate the first hydraulic pump 4 by means of the tiller 3. In order to continue lifting a pressure P is required, this pressure can then be distributed to the hydraulic cylinder 5 through pressure line 24. See figure 2. Valve 21, a check valve, will prevent pressure to enter line 22 when hydraulic fluid is distributed from the first hydraulic pump 4. See also figure 4a.

For all aspects above the initial control of the motor 8 and second hydraulic pump 9 are performed either by a manual switch that an operator can actuate on, or by a further sensor installed on the pallet truck 1 that detects the operation of the manual hydraulic pump 4, an then by means of the control unit 15 initiates operation of the motor 8 within the restrictions as discussed above.

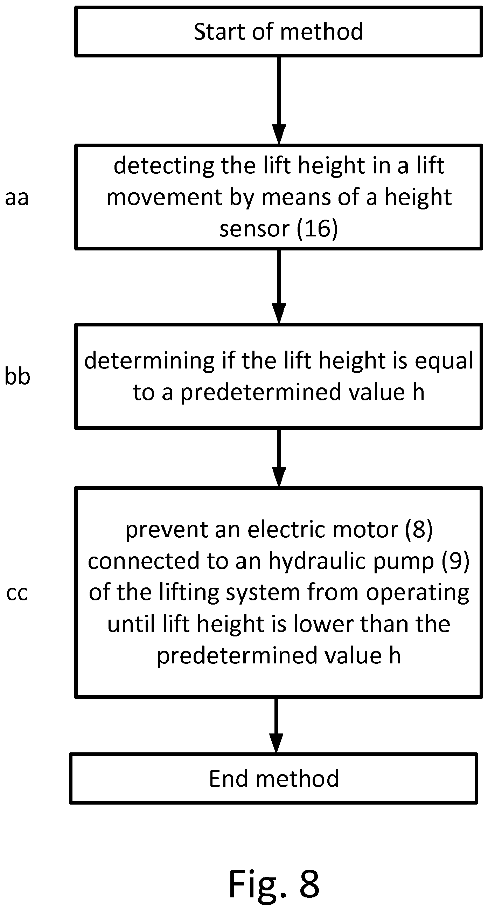

There is further disclosed a method of operating a pallet truck 1 according to figure 8:

The method comprises the steps:
aa. detecting the lift height in a lift movement by means of a height sensor 16,

As detection of lift height is made by a sensor it can be made automatically.
bb. determining if the lift height is equal to a predetermined value h,
cc. prevent an electric motor connected to an hydraulic pump of the lifting system from operating until lift height is lower than the predetermined value h.

The steps of the method prevent the pallet truck 1 from lifting above a certain height h.

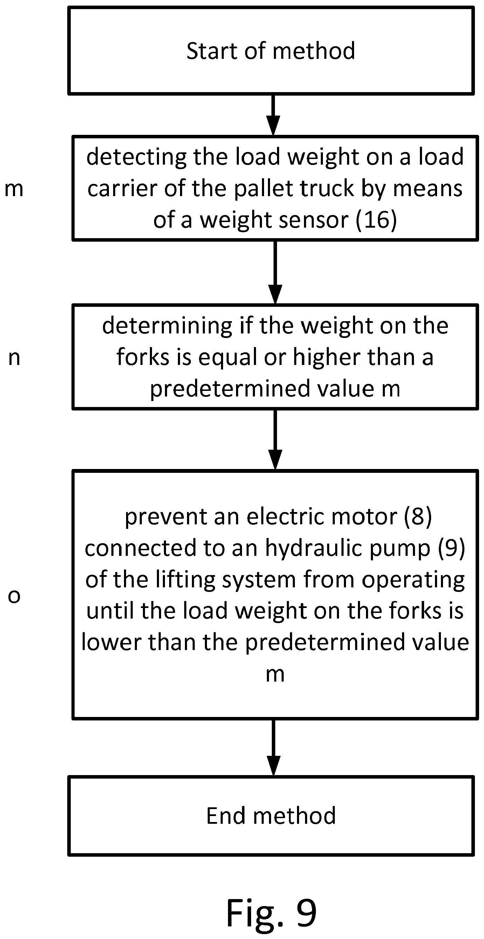

There is further disclosed a method of operating a pallet truck 1 according to figure 9:
The method comprises the steps:
m. detecting the load weight on a load carrier of the pallet truck by means of a weight sensor 16,
n. determining if the weight on the forks is equal or higher than a predetermined value m,
o. prevent an electric motor 8 connected to an hydraulic pump 9 of the lifting system from operating until the load weight on the forks is lower than the predetermined value m.

Thus the lift movement of the pallet truck 1 is restricted from being performed by the electric motor 8 and the hydraulic pump 9 if the load exceeds a predetermined value m. Lifting is still possible by means of a manual hydraulic pump.

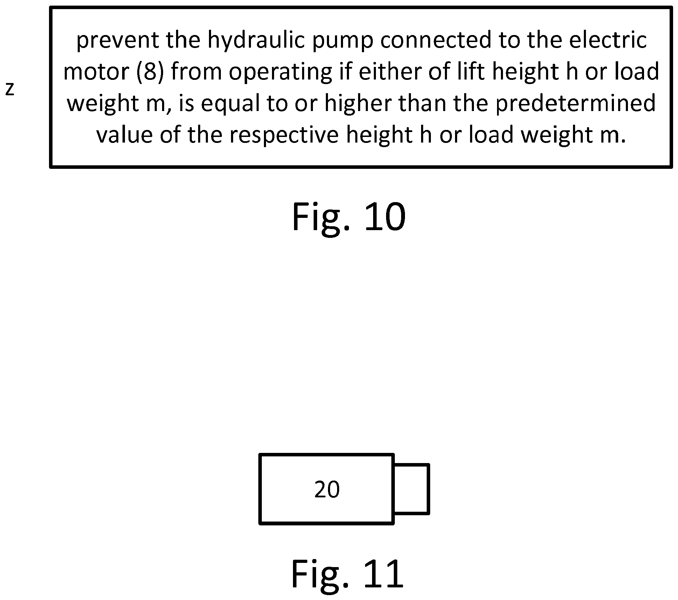

The methods above can be modified by a further step according to figure 10:
z. prevent the hydraulic pump 9 connected to the electric motor 8 from operating if either of lift height h or load weight m, is equal to or higher than the predetermined value of the respective height h or load weight m.

This provides several options for restricting the lifting movement of the pallet truck 1.

There is also disclosed a computer executable software stored on a computer readable medium 20 and transferred to and stored on a control unit 15 of a pallet truck 1 according to any of the aspects above, performs the method according to any of the aspects above. The computer readable medium can be a USB memory, a PC computer, a service computer, a webserver etc. The software can thus be installed through attachment of a cable or by attaching a USB memory in a slot, or also downloadable through a wireless interface etc.

## Claims

1. Pallet truck (1) comprising two forks (2) for lifting and transporting a pallet, a hydraulic lifting system comprising a first hydraulic pump (4) and a hydraulic cylinder (5), a tiller arm (3) that is operable for powering the first hydraulic pump (4) by a manual lifting an lowering movement of the tiller arm (3), such that a load is lifted by actuating of the hydraulic cylinder (5) on the forks (2) to a maximal height H and at a maximal weight M, further comprised are a main wheel (6) that are hinged in a vertical axle (13) to which they are attached, the tiller arm (3) is connected to the wheels (6) for steering them by rotating in the vertical axle (13),
**characterized in that**
the pallet truck (1) comprises an electric motor (8) and a second hydraulic pump (9) powered by the electric motor (8), wherein the electric motor (8) and the second hydraulic pump (9) are operable to lift the forks (2) to the maximal height h, wherein h < H, and/or wherein the electric motor (8) and second hydraulic pump (9) has a capacity to lift a maximal load of mass m, wherein m < M.

2. Pallet truck according to claim 1, wherein further the hydraulic lifting system comprises a hydraulic reservoir (7) for hydraulic fluid, preferably the hydraulic reservoir (7) is common for both the first hydraulic pump (4) and the second hydraulic pump (9).

3. Pallet truck (1) according to any of the claims above, wherein the limitation of the lift height h for the electric motor (8) and the second hydraulic pump (9) is controllable by means of a switch (14) connect to the electric motor (8), wherein the switch (14) turn off power supply the electric motor (8) when actuated by the lift movement of the pallet truck (1), for example the switch is actuated by the extension of the hydraulic cylinder (5).

4. Pallet truck (1) according to any of the claims above wherein the pallet truck comprises a bypass valve (20) that is arranged to open above a predetermined pressure p corresponding to a required pressure for lifting a predetermined weight m, wherein the bypass valve (20) is comprised on pressure side of second hydraulic pump (9) such any pressure P > p could not be transferred to the hydraulic lift cylinder (5) from the second hydraulic pump (9), as the bypass valve (20) would open, preferably the open bypass valve lead to a comprised circulation line (23) leading back to the suction side of the second hydraulic pump (9).

5. Pallet truck (1) according to any of the claims above, wherein the limitation of lift height h and/or weight m is controlled by a control unit (15) comprised in the pallet truck (1) and programmed to stop a lifting movement at a height h and/or a weight m, when a parameter data h and/or m detectable by a height sensor (16) and/or a weight sensor (17) of the pallet truck (1), and wherein said parameter data is transferable to said control unit (15) by means of provided communication means, preferably in form of a cable network.

6. Pallet truck (1) according to any of the claims above, wherein the pallet truck (1) comprises a power source (12), preferably the power source (12) is a battery.

7. Pallet truck (1) according to any of the claims above, wherein the main wheel (6) is a tandem wheel pair comprising two wheels (6a, 6b) on a common axle (19).

8. Method for operating a pallet truck according to any of the claims 1-7, comprising the steps of:
aa. detecting the lift height in a lift movement by means of a height sensor (16),
bb. determining if the lift height is equal to a predetermined value h,
cc. prevent an electric motor (8) connected to an hydraulic pump (9) of the lifting system from operating until lift height is lower than the predetermined value h.

9. Method for operating a pallet truck according to any of the claims 1-7, comprising the steps of:
m. detecting the load weight on a load carrier of the pallet truck by means of a weight sensor(16),
n. determining if the weight on the forks is equal or higher than a predetermined value m,
o. prevent an electric motor (8) connected to an hydraulic pump (9) of the lifting system from operating until the load weight on the forks is lower than the predetermined value m.

10. Method for operating a pallet truck according to claim 8 or 9, comprising the step of:
z. prevent the hydraulic pump connected to the electric motor (8) from operating if either of lift height h or load weight m, is equal to or higher than the predetermined value of the respective height h or load weight m.

11. Computer executable software stored on a computer readable medium (20) that when transferred to and stored on a control unit (15) of a pallet truck (1) according to any of the claims 1-7, performs the method according to any of the claims 8-10.

## Patentansprüche

1. Palettenhubwagen (1) umfassend zwei Gabeln (2) zum Heben und Transportieren einer Palette, ein hydraulisches Hebesystem umfassend eine erste Hydraulikpumpe (4) und einen Hydraulikzylinder (5), eine Deichsel (3), die zum Versorgen der ersten Hydraulikpumpe (4) durch eine manuelle Hebe- und Senkbewegung der Deichsel (3) bedient werden kann, so dass eine Ladung durch Betätigung des Hydraulikzylinders (5) an den Gabeln (2) zur einer maximalen Höhe H und bei einem maximalen Gewicht M gehoben wird, weiter umfasst sind Haupträder (6), die in einer vertikalen Welle (13) eingehängt sind und woran sie befestigt sind, die Deichsel (3) ist zum Lenken durch Rotation der vertikalen Welle (13) mit den Rädern (6) verbunden,
**dadurch gekennzeichnet, dass**
der Palettenhubwagen (1) einen Elektromotor (8) und eine zweite durch den Elektromotor (8) versorgte Hydraulikpumpe (9) umfasst, wobei der Elektromotor (8) und die zweite Hydraulikpumpe (9) zum Heben der Gabeln (2) zu der maximalen Höhe h bedient werden können, wobei h < H, und/oder wobei der Elektromotor (8) und die zweite Hydraulikpumpe (9) die Kapazität hat, eine maximale Massenladung m zu heben, wobei m < M.

2. Palettenhubwagen nach Anspruch 1, wobei das hydraulische Hebesystem weiter ein hydraulisches Reservoir (7) für Hydraulikfluid umfasst, vorzugsweise ist das hydraulische Reservoir (7) gemeinsam für sowohl die erste Hydraulikpumpe (4) als auch die zweite Hydraulikpumpe (9).

3. Palettenhubwagen (1) nach einem der vorhergehenden Ansprüche, wobei die Begrenzung der Hebehöhe h für den Elektromotor (8) und die zweite Hydraulikpumpe (9) mittels eines mit dem Elektromotor (8) verbundenen Schalters (14) steuerbar ist, wobei der Schalter (14) die Stromversorgung des Elektromotors (8) abschaltet, wenn er durch die Hebebewegung des Palettenhubwagens (1) betätigt wird, z.B. wird der Schalter durch eine Verlängerung des Hydraulikzylinders (5) betätigt.

4. Palettenhubwagen (1) nach einem der vorhergehenden Ansprüche, wobei der Palettenhubwagen ein Bypassventil (20) umfasst, das dafür eingerichtet ist, oberhalb eines vorgegebenen Drucks p zu öffnen, der einem erforderlichen Druck zum Heben eines vorgegebenen Gewichts m entspricht, wobei das Bypassventil (20) auf der Druckseite der zweiten Hydraulikpumpe (9) umfasst ist, so dass ein eventueller Druck P > p zum hydraulischen Hebezylinder (5) von der zweiten Hydraulikpumpe (9) nicht übertragen werden kann, wodurch das Bypassventil (20) öffnen würde, vorzugsweise führt das offene Bypassventil zu einer umfassten Zirkulationsleitung (23), die zurück zur Saugseite der zweiten Hydraulikpumpe (9) führt.

5. Palettenhubwagen (1) nach einem der vorhergehenden Ansprüche, wobei die Begrenzung der Hebehöhe h und/oder des Gewichts m durch eine Steuereinheit (15) gesteuert wird, die im Palettenhubwagen (1) enthalten ist und zum Anhalten einer Hebebewegung in einer Höhe h und/oder an einem Gewicht m programmiert ist, wenn Parameterdaten h und/oder m durch einen Höhensensor (16) und/oder einen Gewichtssensor (17) des Palettenhubwagens (1) detektiert werden können, und wobei die Parameterdaten an die Steuereinheit (15) mittels bereitgestellter Kommunikationsmittel übertragen werden können, vorzugsweise in Form eines Kabelnetzwerks.

6. Palettenhubwagen (1) nach einem der vorhergehenden Ansprüche, wobei der Palettenhubwagen (1) eine Stromquelle (12) umfasst, vorzugsweise ist die Stromquelle (12) eine Batterie.

7. Palettenhubwagen (1) nach einem der vorhergehenden Ansprüche, wobei das Hauptrad (6) ein Tandemradpaar mit zwei Rädern (6a, 6b) auf einer gemeinsamen Welle (19) ist.

8. Verfahren zum Betrieb eines Palettenhubwagens nach einem der Ansprüche 1-7, umfassend die folgenden Schritte:
aa. Detektieren der Hebehöhe in einer Hebebewegung mittels eines Höhensensors (16),
bb. Ermitteln, ob die Höhe gleich einem vorgegebenen Wert h ist,
cc. Verhindern, dass ein Elektromotor (8), der mit einer Hydraulikpumpe (9) des Hebesystems verbunden ist, betrieben wird, bis die Hebehöhe niedriger als der vorgegebene Wert h ist.

9. Verfahren zum Betrieb eines Palettenhubwagens nach einem der Ansprüche 1-7, umfassend die folgenden Schritte:
m. Detektieren des Ladungsgewichts auf einem Ladungsträger des Palettenhubwagens mittels eines Gewichtssensors (16),
n. Ermitteln, ob das Gewicht auf den Gabeln gleich oder höher als ein vorgegebener Wert m ist,
o. Verhindern, dass ein Elektromotor (8), der mit einer Hydraulikpumpe (9) des Hebesystems verbunden ist, betrieben wird, bis das Ladungsgewicht auf den Gabeln niedriger als der vorgegebene Wert m ist.

10. Verfahren zum Betrieb eines Palettenhubwagens nach Anspruch 8 oder 9, umfassend die folgenden Schritte:
z. Verhindern, dass die Hydraulikpumpe, die mit dem Elektromotor (8) verbunden ist, betrieben wird, wenn die Hebehöhe h oder das Ladungsgewicht m gleich oder höher als der vorgegebene Wert der jeweiligen Höhe h oder des jeweiligen Ladungsgewichts m ist.

11. Computerausführbare Software, die auf einem computerlesbaren Medium (20) gespeichert ist, das wenn es an eine Steuereinheit (15) eines Palettenhubwagens (1) nach einem der Ansprüche 1-7 übertragen wird und darauf gespeichert wird, das Verfahren nach einem der Ansprüche 8-10 ausführt.

## Revendications

1. Chariot à palette (1) comprenant deux fourches (2) pour le levage et le transport d'une palette, un système de levage hydraulique comprenant une première pompe hydraulique (4) et un cylindre hydraulique (5), un timon (3) qui peut fonctionner pour alimenter la première pompe hydraulique (4) par un mouvement manuel de levage et d'abaissement du timon (3), si bien qu'une charge est soulevée par l'actionnement du cylindre hydraulique (5) sur les fourches (2) à une hauteur maximale H et à une poids maximal M, comprenant en outre une roue principale (6) qui sont articulées dans un essieu vertical (13) auquel elles sont attachées, le timon (3) est relié aux roues (6) pour les diriger en tournant dans l'essieu vertical (13),
**caractérisé en ce que**
le chariot à palette (1) comprend un moteur électrique (8) et une deuxième pompe hydraulique (9) alimentée par le moteur électrique (8), dans lequel le moteur électrique (8) et la deuxième pompe hydraulique (9) peuvent fonctionner pour soulever les fourches (2) à la hauteur maximale h, où h < H, et / ou où le moteur électrique (8) et la deuxième pompe hydraulique (9) présentent une capacité de soulever une charge maximale de masse m, où m < M.

2. Chariot à palette selon la revendication 1, dans lequel en outre le système de levage hydraulique comprend un réservoir hydraulique (7) pour le fluide hydraulique, de préférence le réservoir hydraulique (7) est commun à la fois à la première pompe hydraulique (4) et à la deuxième pompe hydraulique (9).

3. Chariot à palette (1) selon l'une quelconque des revendications précédentes, dans lequel la limitation de la hauteur de levage h pour le moteur électrique (8) et la deuxième pompe hydraulique (9) est réglable au moyen d'un commutateur (14) connecté au moteur électrique (8), dans lequel le commutateur (14) coupe l'alimentation électrique du moteur électrique (8) lorsqu'il est actionné par le mouvement de levage du chariot à palette (1), par exemple le commutateur est actionné par l'extension du cylindre hydraulique (5).

4. Chariot à palette (1) selon l'une quelconque des revendications précédentes, dans lequel le chariot à palette comprend une soupape de dérivation (20) qui est agencée pour s'ouvrir au-dessus d'une pression prédéterminée p correspondant à une pression requise pour soulever un poids prédéterminé m, dans lequel la soupape de dérivation (20) est comprise du côté pression de la deuxième pompe hydraulique (9) si bien que toute pression P > p ne pourrait pas être transférée au cylindre de levage hydraulique (5) depuis la deuxième pompe hydraulique (9), car la soupape de dérivation (20) s'ouvrirait, de préférence la soupape de dérivation ouverte mène à une conduite de circulation comprise (23) retournant au côté aspiration de la deuxième pompe hydraulique (9).

5. Chariot à palette (1) selon l'une quelconque des revendications précédentes, dans lequel la limitation de la hauteur de levage h et / ou du poids m est commandée par une unité de commande (15) comprise dans le chariot à palette (1) et programmée pour arrêter un mouvement de levage à une hauteur h et / ou un poids m, lorsqu'une donnée de paramètre h et / ou m détectable par un capteur de hauteur (16) et / ou un capteur de poids (17) du chariot à palette (1), et dans lequel lesdites données de paramètre sont transférable à ladite unité de commande (15) au moyen de moyens de communication prévus, de préférence dans la forme d'un réseau câblé.

6. Chariot à palette (1) selon l'une quelconque des revendications précédentes, dans lequel le chariot à palette (1) comprend une source d'alimentation (12), de préférence la source d'alimentation (12) est une batterie.

7. Chariot à palette (1) selon l'une quelconque des revendications précédentes, dans lequel la roue principale (6) est une paire de roues tandem comprenant deux roues (6a, 6b) sur un essieu commun (19).

8. Procédé de fonctionnement d'un chariot à palette selon l'une quelconque des revendications 1 à 7, comprenant les étapes consistant à :
å. détecter la hauteur de levage dans un mouvement de levage au moyen d'un capteur de hauteur (16),
ä. déterminer si la hauteur de levage est égale à une valeur prédéterminée h,
ô. empêcher un moteur électrique (8) relié à une pompe hydraulique (9) du système de levage de fonctionner jusqu'à ce que la hauteur de levage soit inférieure à la valeur prédéterminée h.

9. Procédé de fonctionnement d'un chariot à palette selon l'une quelconque des revendications 1 à 7, comprenant les étapes consistant à :
m. détecter le poids de charge sur un porte-charge du chariot à palette au moyen d'un capteur de poids (16),
n. déterminer si le poids sur les fourches est égal ou supérieur à une valeur prédéterminée m,
o. empêcher un moteur électrique (8) relié à une pompe hydraulique (9) du système de levage de fonctionner jusqu'à ce que le poids de charge sur les fourches soit inférieure à la valeur prédéterminée m.

10. Procédé de fonctionnement d'un chariot à palette selon la revendication 8 ou 9, comprenant les étapes consistant à :
z. empêcher la pompe hydraulique reliée au moteur électrique (8) de fonctionner si l'un de la hauteur de levage h ou du poids de charge m est égal ou supérieur à la valeur prédéterminée respectivement de la hauteur h ou du poids de charge m.

11. Logiciel exécutable par ordinateur stocké sur un support lisible par ordinateur (20) qui, lorsqu'il est transféré et stocké sur une unité de commande (15) d'un chariot à palette (1) selon l'une quelconque des revendications 1 à 7, exécute le procédé selon l'une quelconque des revendications 8 à 10.
